Europäisches Patentamt

European Patent Office

Office européen des brevets

(11) Veröffentlichungsnummer: **0 189 758**
A1

# (12) EUROPÄISCHE PATENTANMELDUNG

(21) Anmeldenummer: 86100169.1

(22) Anmeldetag: 08.01.86

(51) Int. Cl.⁴: **H 02 G 3/20**
**F 21 V 21/02**

(30) Priorität: 22.01.85 DE 3501957

(43) Veröffentlichungstag der Anmeldung:
06.08.86 Patentblatt 86/32

(84) Benannte Vertragsstaaten:
AT DE IT SE

(71) Anmelder: Siemens Aktiengesellschaft Berlin und
München
Wittelsbacherplatz 2
D-8000 München 2(DE)

(72) Erfinder: Stöllinger, Franz
Prüfeninger Schulgasse 5 A
D-8400 Regensburg(DE)

(72) Erfinder: Schlosser, Werner
Marienbader Strasse 1
D-8400 Regensburg(DE)

(54) Leuchten-Steckverbinder.

(57) Leuchten-Steckverbinder aus einer Steckdose, die an einem Leitungsauslaß anschließbar ist, mit Befestigungsmittel für eine Leuchte, und aus einem Stecker, der an einer Leuchte anschließbar ist. Erfindungsgemäß ist vorgesehen, daß die Steckdose aus einem Aufnahmekörper (1) mit den elektrischen Steckeraufnahmen und aus einer gesonderten Halterung (2) mit Leuchtenbefestigungsmittel (4) und Befestigungsmittel zum Anbringen an Baukörperwänden besteht, die eine Ausnehmung (17) für Stecker (8) und/oder Aufnahmekörper (1) aufweist, wobei der Aufnahmekörper (1) an der Halterung (2) befestigbar ist.

FIG 1

EP 0 189 758 A1

Siemens Aktiengesellschaft
Berlin und München

Unser Zeichen .
VPA 85 P 3018 E

0189758

Leuchten-Steckverbinder

Die Erfindung bezieht sich auf Leuchten-Steckverbinder aus einer Steckdose, die an einem Leitungsauslaß anschließbar ist, mit Befestigungsmittel für eine Leuchte, und aus einem Stecker, der an einer Leuchte anschließbar ist.

Aus der Literatur sind Leuchten-Steckverbinder in den verschiedenartigsten Ausführungen bekannt, wobei die Steckdose an einer Halterung für die Leuchte ausgebildet ist. Eine solche Halterung weist in der Regel einen Haken zum Aufhängen der Leuchte auf. Die Halterung kann bei plattenförmiger Ausbildung mit Schrauben an Dübeln in der Decke befestigt werden. Um den elektrischen Deckenauslaß am Steckverbinder anzuschließen, sind die Leitungen von einem Monteur an der Decke in die Steckdose einzuführen und dann diese mit ihrer Halterung an der Decke zu befestigen. Andere Leitungsauslässe, wie Leitungen, die in der Wand für Wandleuchter bereitgestellt werden, können an einem solchen Leuchtensteckverbinder wegen der unhandlichen Größe der Halterung nicht angeschlossen werden.

Der Erfindung liegt die Aufgabe zugrunde, die Handhabung des Leuchten-Steckverbinders zu erleichtern und ihn vielseitiger verwendungsfähig zu gestalten.

Die Lösung der geschilderten Aufgabe besteht nach der Erfindung darin, daß die Steckdose aus einem Aufnahmekörper mit den elektrischen Steckeraufnahmen und aus einer gesonderten Halterung mit Leuchtenbefestigungsmittel und Mittel zum Befestigen an Baukörperwänden besteht, die eine Ausnehmung für Stecker und/oder Aufnahmekörper aufweist, wobei der Aufnahmekörper an der Halterung befestigbar ausgebildet ist.

Bei einem derartigen Leuchten-Steckverbinder kann der Aufnahmekörper bequem für sich an der Leitung des Leitungsauslasses angeschlossen und dann in der Halterung eingesteckt an einer Decke montiert werden. Der Aufnahmekörper kann aber auch für sich in einer Wanddose eingesetzt werden und ermöglicht dann, eine Wandleuchte mit dem Stecker anzuschließen.

Bei Nachinstallation kann der Aufnahmekörper quasi anstelle einer Lüsterklemme an der Decke oder an der Wand vom Fachmann angeschlossen werden und der Laie kann dann gefahrlos eine mit Stecker versehene Leuchte durch Einstecken in den Aufnahmekörper anschließen.

Wenn der Aufnahmekörper und der Stecker durch unterschiedlichen Abstand zwischen gleichartigen Kontaktgliedern unverwechselbar ausgebildet ist, begünstigen die gleichartigen Kontaktglieder die Serienfertigung und die Unverwechselbarkeit erhöht zugleich die Sicherheit für den Verbraucher.

Wenn der Aufnahmekörper einen flanschartigen Rand aufweist, der seitlich Öffnungen zum Aufnehmen von Schrauben für Schraubbefestigungen bildet, kann man den Aufnahmekörper einerseits leicht an der Halterung befestigen, um eine Deckenleuchte anzubringen. Der Aufnahmekörper kann ebenso leicht in eine Abdeckung für Dosen eingepaßt und angeschraubt werden, um einen Wandauslaß zu bilden. Es ist vorteilhaft, wenn der Aufnahmekörper einen Gehäusesockel bildet, dessen Abdeckung für die aufgenommenen elektrischen Klemm- und Kontaktmittel durch einen überstehenden Rand ihrerseits den Flansch bildet.

Die Erfindung soll anhand von in der Zeichnung grob schematisch wiedergegebenen Ausführungsbeispielen näher erläutert werden:

In Fig. 1 ist ein Leuchten-Steckverbinder im Längsschnitt ohne Stecker veranschaulicht.
In Fig. 2 ist der Leuchten-Steckverbinder nach Fig. 1 in Ansicht von unten, wenn man ihn sich beispielsweise an einer Decke montiert vorstellt, wiedergegeben. Die Ansicht nach Fig. 1 ergibt sich nach einem Schnitt längs I-I nach Fig. 2.
In Fig. 3 ist der Stecker des Leuchten-Steckverbinders in Teilaufbruch dargestellt.
In Fig. 4 ist der Aufnahmekörper des Leuchten-Steckverbinders für sich in Seitenansicht wiedergegeben.
In Fig. 5 ist der Aufnahmekörper in einer Wanddose eingesetzt veranschaulicht.

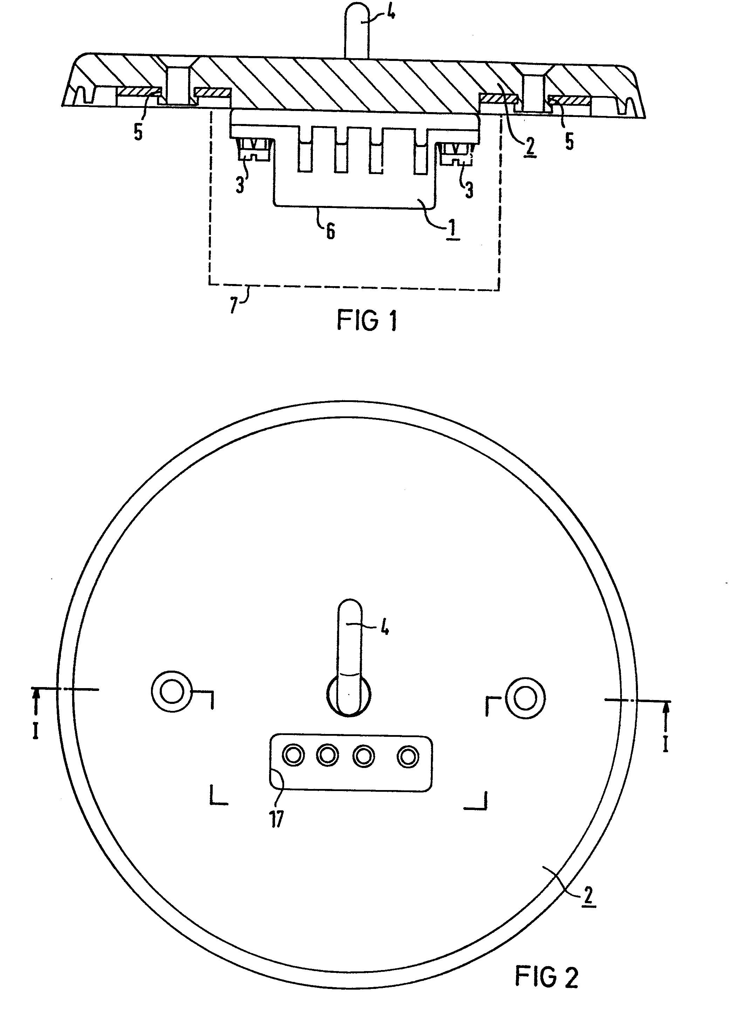

Der Leuchtensteckverbinder nach Fig. 1 veranschaulicht eine Steckdose aus einem Aufnahmekörper 1, der die elektrischen Steckeraufnahmen für einen anzuschließenden Stecker sowie die Kontakte zum Anklemmen von elektrischen Leitern enthält. Der Aufnahmekörper 1 ist an einer gesonderten Halterung 2 durch Schrauben 3 befestigbar. Er paßt in die Halterung 2 ein und ermöglicht in einer Ausnehmung 17 nach Fig. 2 einen Stecker einzustecken. Die gesonderte Halterung 2 kann in üblicher Weise ein Leuchtenbefestigungsmittel 4, beispielsweise einen Leuchtenhaken zum Aufhängen einer Leuchte aufweisen sowie Befestigungsmittel 5 zum Anbringen an Baukörperwänden. Im Ausführungsbeispiel sind die Befestigungsmittel einfach Ausnehmungen, in die Schrauben einpassen, die in Deckendübel eingreifen können. Am Boden 6 des Aufnahmekörpers 1 können Öffnungen zum Einführen anzuschließender Leiter eines Leitungsauslasses ausgebildet sein. Eine Deckendose 7 ist symbolisiert dargestellt. Zwischen den Befestigungsmitteln 5 zum Anbringen an einer Decke ist im Ausführungsbeispiel eine Verstärkungsschiene angeordnet, die dem Lampenhaken zusätzlich Halt gibt.

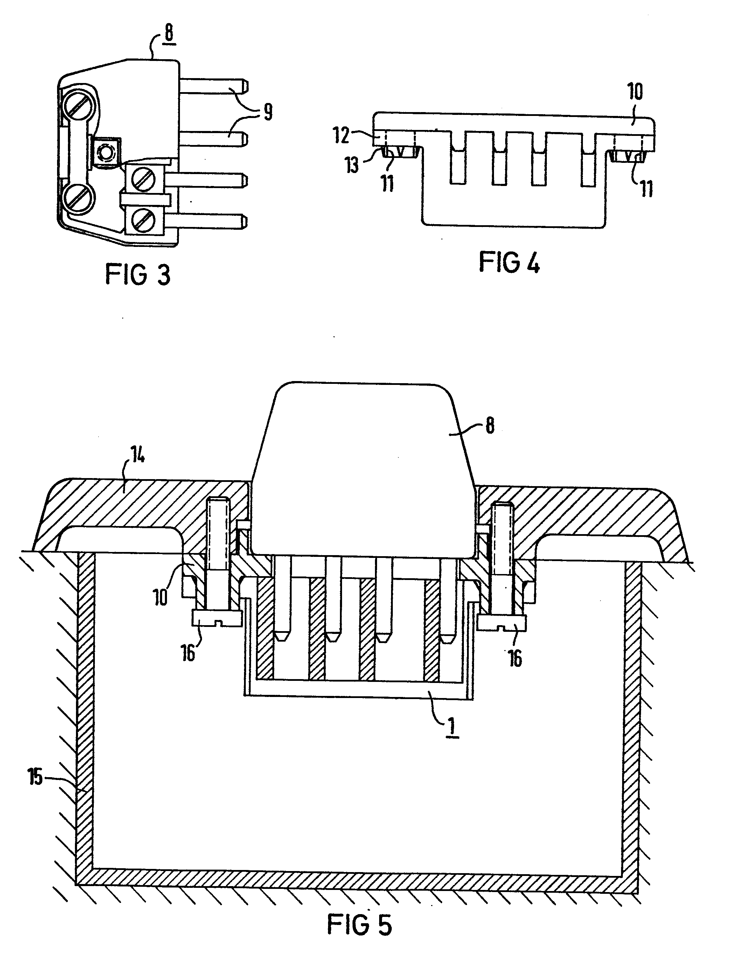

Der Aufnahmekörper 1 und der Stecker 8 nach Fig. 3 können durch in unterschiedlichem Abstand angeordnete gleichartige Kontaktglieder - Steckerstifte 9 des Steckers 8 - unverwechselbar ausgebildet sein, wie es in Fig. 3 für drei Pole und einen Schutzleiter veranschaulicht ist.

Es ist günstig, wenn der Aufnahmekörper 1 nach Fig. 4 einen flanschartigen Rand 10 bildet, der seitlich Öffnungen 11 zum Aufnehmen von Schrauben für Schraubbefestigungen bildet. Im Ausführungsbeispiel ist der Aufnahmekörper 1 als Gehäusesockel ausgebildet, dessen Abdeckung durch einen überstehenden Rand den Flansch 10 bildet, wobei der Flansch auf seitlichen Lappen 12 aufliegt, mit denen er durch hülsenartige Verlängerungen 13 vernietet oder verschweißt sein kann. Es ist besonders günstig, wenn die Abdeckung mit dem Gehäusesockel durch angeformte geschlitzte Hülsen mit überstehendem Schnapprand verbunden ist, wobei die Hülsen die Öffnungen zum Aufnehmen von Schrauben bilden. Die in Fig. 4 wiedergegebene Ausbildung kann als eine solche verstanden werden.

In Fig. 5 ist veranschaulicht, wie der Aufnahmekörper 1 des Leuchten-Steckverbinders in einer Abdeckung 14 einer Wanddose 15 eingesetzt und mit Schrauben 16

0189758

befestigt ist, die durch die Öffnungen 11 im Flanschrand 10 hindurchgreifen. Eine Leuchte kann dann mittels
des Steckers 8 angesteckt werden.

6 Patentansprüche
5 Figuren

0189758

Patentansprüche

1. Leuchten-Steckverbinder aus einer Steckdose, die an einem Leitungsauslaß anschließbar ist, mit Befestigungsmittel für eine Leuchte, und aus einem Stecker, der an einer Leuchte anschließbar ist, d a d u r c h g e k e n n z e i c h n e t, daß die Steckdose aus einem Aufnahmekörper (1) mit den elektrischen Steckeraufnahmen und aus einer gesonderten Halterung (2) mit Leuchtenbefestigungsmittel (4) und Befestigungsmittel (5) zum Anbringen an Baukörperwänden besteht, die eine Ausnehmung (17) für Stecker (8) und/oder Aufnahmekörper (1) aufweist, wobei der Aufnahmekörper (1) an der Halterung (2) befestigbar ist.

2. Leuchten-Steckverbinder nach Anspruch 1, d a - d u r c h g e k e n n z e i c h n e t, daß der Aufnahmekörper (1) und der Stecker (8) durch unterschiedlichen Abstand zwischen gleichartigen Kontaktgliedern unverwechselbar ausgebildet ist.

3. Leuchten-Steckverbinder nach Anspruch 1 oder 2, d a d u r c h g e k e n n z e i c h n e t, daß der Aufnahmekörper (1) einen flanschartigen Rand (10) aufweist, der seitlich Öffnungen (11) zum Aufnehmen von Schrauben für Schraubbefestigungen bildet.

4. Leuchten-Steckverbinder nach Anspruch 3, d a - d u r c h g e k e n n z e i c h n e t, daß der Aufnahmekörper (1) in Abdeckungen (14) für Wanddosen (15) einpaßt und anschraubbar ist.

**0189758**

5. Leuchten-Steckverbinder nach Anspruch 3, d a - d u r c h  g e k e n n z e i c h n e t, daß der Auf- nahmekörper (1) einen Gehäusesockel bildet, dessen Abdeckung durch einen überstehenden Rand den Flansch bildet, der mit seitlichen Lappen (12) des Gehäusesockels verbunden ist.

6. Leuchten-Steckverbinder nach Anspruch 5, d a - d u r c h  g e k e n n z e i c h n e t, daß die Ab- deckung mit dem Gehäusesockel durch angeformte geschlitzte Hülsen mit überstehendem Schnapprand verbunden ist, wobei die Hülsen Öffnungen (11) zum Auf- nehmen von Schrauben bilden.

1/2

0189758

FIG 1

FIG 2

FIG 3

FIG 4

FIG 5

Europäisches
Patentamt

**EUROPÄISCHER RECHERCHENBERICHT**

0189758
Nummer der Anmeldung

EP 86 10 0169

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-2 330 942 (E.G.K. ANDERSON)<br>* Seite 2, Spalte 1, Zeilen 24-28; Figuren 1,5 * | 1,3,4 | H 02 G 3/20<br>F 21 V 21/02 |
| X | US-A-1 666 223 (W. SYMMES)<br>* Seite 2, Zeilen 54-102; Figur 3 * | 1 | |
| A | CH-A- 533 800 (BOVARD & CIE.)<br>* Spalte 3, Zeilen 35-45; Figuren 1,3 * | 4 | |
| A | DE-A-2 330 447 (TRINKLEIN)<br>* Seite 5, Zeilen 5-8; Figur 2 * | 2 | |
| A | US-A-3 302 918 (D.A. COHEN)<br>* Spalte 2, Zeilen 52-62; Figuren 1,2,4 * | 1-4 | RECHERCHIERTE SACHGEBIETE (Int. Cl.4)<br><br>H 02 G 3/20<br>F 21 V 21/00 |

Der vorliegende Recherchenbericht wurde für alle Patentansprüche erstellt.

| Recherchenort<br>DEN HAAG | Abschlußdatum der Recherche<br>25-04-1986 | Prüfer<br>CRIQUI J.J. |
|---|---|---|